# FASCICULE DE BREVET EUROPEEN

(11) **EP 1 750 343 B1**
(45) Date de publication et mention de la délivrance du brevet: **04.11.2015**
(21) Numéro de dépôt: 06354020.7
(22) Date de dépôt: 27.06.2006
(51) Int. Cl.: H02H 1/06, H01H 71/12

(54) **Déclencheur électronique pourvu d'un circuit d'alimentation comportant des moyens rehausseurs de tension et disjoncteur comportant un tel déclencheur**
Elektronischer Auslöser mit einer Stromversorgungsschaltung einschliesslich Spannungserhöhungsmittel und Leistungschalter mit solchem Auslöser
Electronic trip device with a power supply circuit comprising voltage step-up means, and circuit breaker comprising such device

(30) Priorité: 02.08.2005 FR 0508273
(43) Date de publication de la demande: 07.02.2007
(73) Titulaire: Schneider Electric Industries SAS, 92500 Rueil-Malmaison (FR)
(72) Inventeur: Houbre, Pascal c/o Schneider Electric Ind SAS, 38050 Grenoble Cedex 09 (FR)
(74) Mandataire: Tripodi, Paul

(56) Documents cités:
- DE-A1- 10 010 924
- DE-A1- 19 738 699
- DE-A1- 19 954 038
- US-A- 5 541 499
- US-A1- 2002 191 361

## Description

### DOMAINE TECHNIQUE DE L'INVENTION

L'invention relève du domaine des disjoncteurs, et plus particulièrement celui des déclencheurs électroniques équipant ces disjoncteurs.

L'invention concerne plus particulièrement un déclencheur électronique pour disjoncteur, ledit déclencheur comprenant :
- au moins un capteur de courant pour fournir un courant secondaire représentatif d'un courant primaire dans un conducteur principal dudit disjoncteur,
- un circuit de redressement pour redresser le courant secondaire et fournir un courant d'alimentation,
- un ensemble électronique de traitement pour commander un actionneur destiné à actionner un mécanisme d'ouverture du conducteur principal, et
- un circuit d'alimentation électrique doté d'un condensateur de stockage destiné à alimenter électriquement l'actionneur et d'un régulateur de tension destiné à fournir une tension d'alimentation de l'ensemble électronique de traitement, ledit condensateur de stockage étant chargé à l'aide du courant d'alimentation.

L'invention concerne également un disjoncteur comprenant :
- au moins un conducteur principal,
- un mécanisme d'ouverture du conducteur principal,
- un actionneur destiné à actionner le mécanisme d'ouverture, et
- un déclencheur avec un ensemble électronique de traitement pour commander l'actionneur et un circuit d'alimentation électrique destiné à alimenter électriquement l'actionneur doté d'un régulateur de tension destiné à fournir une tension d'alimentation de l'ensemble électronique de traitement.

### ETAT DE LA TECHNIQUE

Dans les déclencheurs de l'art antérieur, le régulateur de tension destiné à fournir une tension d'alimentation VA à l'ensemble électronique de traitement est généralement alimenté par une tension VM aux bornes du condensateur de stockage. Dans ces déclencheurs, le condensateur de stockage est généralement chargé à l'aide du courant secondaire issu des capteurs de courant, comme divulgué par US 2002/191361 et DE 10010924.

Un problème des déclencheurs de l'art antérieur est que le temps de charge du condensateur de stockage destiné à alimenter électriquement l'actionneur est généralement long. De ce fait, le temps de montée de la tension d'alimentation VA de l'ensemble électronique de traitement, qui dépend de la tension VM aux bornes du condensateur de stockage, est également long. Pour que l'ensemble électronique de traitement fonctionne normalement, la tension VM aux bornes du condensateur de stockage doit être supérieure à la valeur nominale de la tension d'alimentation VA de l'ensemble électronique de traitement.

Ainsi, lors de la mise sous tension du disjoncteur, la charge du condensateur de stockage a tendance à retarder la mise sous tension de l'ensemble électronique de traitement du déclencheur.

### EXPOSE DE L'INVENTION

L'invention a pour objet un déclencheur électronique et un disjoncteur doté d'un tel déclencheur, ledit déclencheur comportant, dans son circuit d'alimentation, des moyens permettant de réduire le retard de la mise sous tension de l'ensemble électronique de traitement.

L'invention concerne donc un déclencheur électronique comprenant :
- au moins un capteur de courant pour fournir un courant secondaire représentatif d'un courant primaire dans un conducteur principal dudit disjoncteur,
- un circuit de redressement pour redresser le courant secondaire et fournir un courant d'alimentation,
- un ensemble électronique de traitement pour commander un actionneur destiné à actionner un mécanisme d'ouverture du conducteur principal, et
- un circuit d'alimentation électrique doté d'un condensateur de stockage destiné à alimenter électriquement l'actionneur et d'un régulateur de tension destiné à fournir une tension d'alimentation de l'ensemble électronique de traitement, ledit condensateur de stockage étant chargé à l'aide du courant d'alimentation,
dans lequel le circuit d'alimentation comporte des moyens rehausseurs de tension permettant de fournir une tension rehaussée à l'entrée du régulateur de tension destiné à fournir la tension d'alimentation de l'ensemble électronique de traitement, ladite tension rehaussée étant supérieure à une tension aux bornes du condensateur de stockage.

Dans un mode particulier, les moyens rehausseurs de tension comportent une résistance connectée en série avec le condensateur de stockage de sorte que, lors de la circulation du courant d'alimentation pour charger ledit condensateur, la tension rehaussée a une valeur supérieure ou égale à la somme de la tension aux bornes dudit condensateur et de la tension aux bornes de ladite résistance.

Dans un autre mode particulier, les moyens rehausseurs de tension comportent un limiteur de tension connecté en série avec le condensateur de stockage de sorte que, lors de la circulation du courant d'alimentation pour charger ledit condensateur de stockage, la tension rehaussée atteint rapidement une valeur supérieure ou égale à la somme de la tension aux bornes dudit condensateur et d'une tension de limitation dudit limiteur de tension. De préférence, le limiteur de tension est une diode limitatrice de tension présentant une tension de limitation, ladite diode étant connectée en inverse.

Selon un mode de réalisation préférentiel, les moyens rehausseurs de tension comportent une résistance et un limiteur de tension connectés en parallèle.

De préférence, dans le cas où les moyens rehausseurs comportent un limiteur de tension, la tension de limitation est supérieure ou égale à une valeur nominale de la tension d'alimentation de l'ensemble électronique de traitement.

Avantageusement la tension d'alimentation aux bornes du condensateur de stockage est régulée par un régulateur de tension.

De préférence, le déclencheur électronique comporte des moyens de filtrage de la tension rehaussée connectés en amont du régulateur de tension destiné à fournir la tension d'alimentation de l'ensemble électronique de traitement.

L'invention concerne également un disjoncteur comprenant :
- au moins un conducteur principal,
- un mécanisme d'ouverture du conducteur principal,
- un actionneur destiné à actionner le mécanisme d'ouverture, et
- un déclencheur avec un ensemble électronique de traitement pour commander l'actionneur et un circuit d'alimentation électrique destiné à alimenter électriquement l'actionneur doté d'un régulateur de tension destiné à fournir une tension d'alimentation de l'ensemble électronique de traitement,
dans lequel le déclencheur est un déclencheur tel que décrit précédemment, comportant des moyens rehausseurs de tension permettant de fournir une tension rehaussée à l'entrée du régulateur de tension destiné à fournir la tension d'alimentation de l'ensemble électronique de traitement.

### BREVE DESCRIPTION DES FIGURES

D'autres avantages et caractéristiques ressortiront plus clairement de la description qui suit d'un mode particulier de réalisation de l'invention, donné à titre d'exemple non limitatif, et représenté dans les figures annexées.

La figure 1 représente un schéma bloc simplifié d'un disjoncteur dans lequel un déclencheur selon l'invention peut être mis en oeuvre.

La figure 2 représente un schéma d'un déclencheur selon l'art antérieur.

La figure 3 représente un schéma d'un déclencheur selon un mode de réalisation de l'invention.

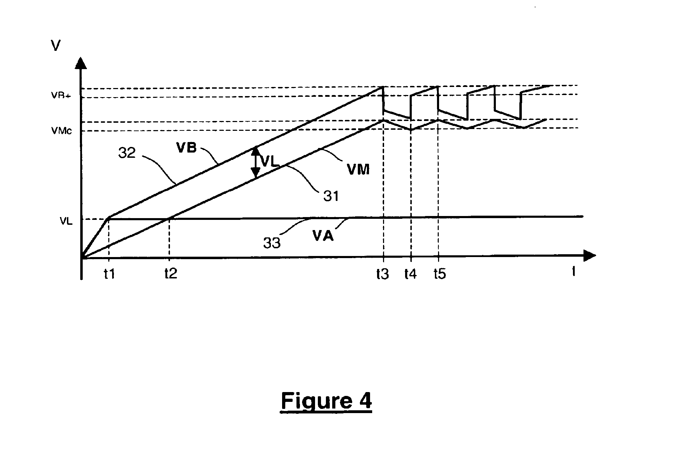

La figure 4 illustre sur des courbes 3.a à 3.c, divers signaux de tension dans un déclencheur selon la Figure 3, pendant une phase transitoire de mise sous tension du disjoncteur.

La figure 5 représente un schéma d'un déclencheur selon un mode de l'invention comportant un circuit intégré.

### DESCRIPTION DETAILLEE D'UN MODE DE REALISATION

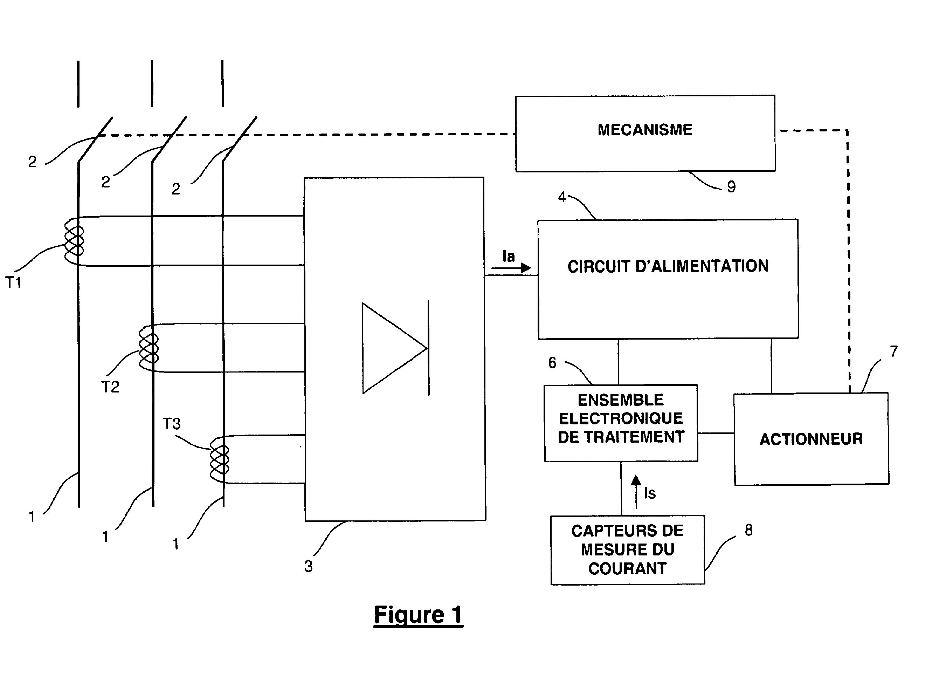

Le disjoncteur représenté à la Figure 1 agit sur trois conducteurs principaux 1 dudit disjoncteur. Notons que le dispositif de l'invention peut comporter un nombre quelconque de conducteurs principaux. Les conducteurs principaux sont connectés à des contacts 2 permettant d'établir ou d'interrompre le courant primaire circulant dans ces conducteurs.

Des capteurs de courant T1, T2, T3 associés aux différents conducteurs principaux transforment le courant primaire de forte valeur en un courant secondaire compatible avec le déclencheur électronique. Un circuit de redressement 3 fournit un courant d'alimentation la à un circuit d'alimentation 4 du déclencheur.

Le disjoncteur comporte un ensemble électronique de traitement 6 destiné à commander un actionneur 7 à partir d'un signal Is représentatif de l'intensité du courant primaire dans au moins un conducteur principal du disjoncteur. Dans le mode de réalisation représenté à la Figure 1, la fourniture du signal Is représentatif de l'intensité du courant primaire est réalisée par des moyens séparés 8 comportant un capteur de courant. Il aurait pu être envisagé d'utiliser les mêmes capteurs de courant pour fournir au circuit d'alimentation 4 un courant d'alimentation Ia, d'une part, et pour fournir à l'ensemble électronique de traitement un signal Is représentatif de l'intensité du courant primaire, d'autre part. L'actionneur 7 permet d'ouvrir les conducteurs principaux 1 par l'intermédiaire d'un mécanisme 9 agissant sur l'ouverture des contacts 2.

Ainsi, le circuit d'alimentation 4 fournit à l'actionneur 9 une tension d'alimentation. Le circuit d'alimentation 4 est doté d'un régulateur de tension destiné à fournir une tension d'alimentation VA pour alimenter l'ensemble électronique de traitement 6.

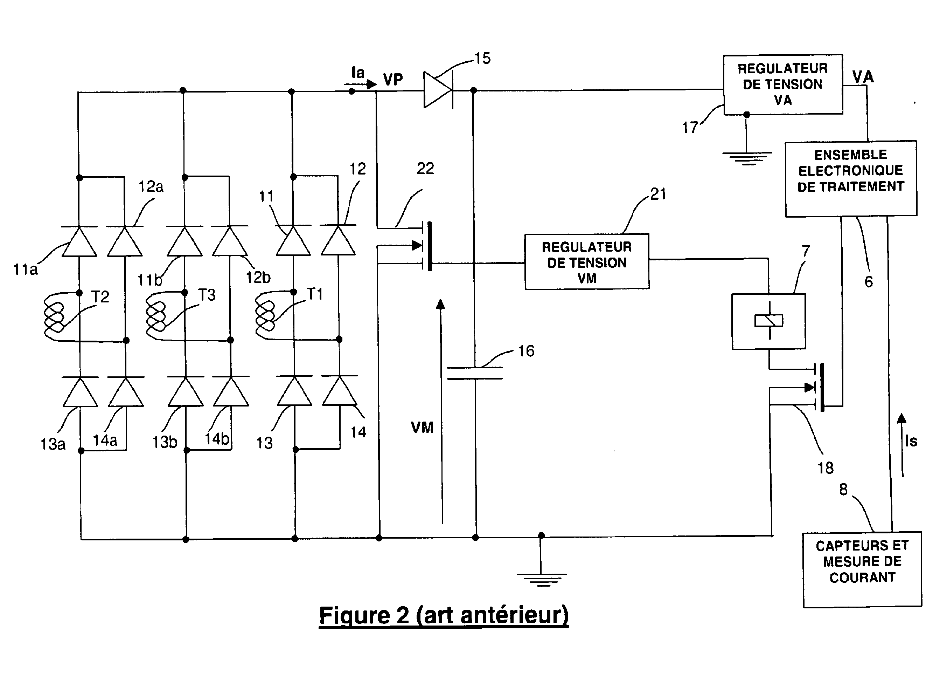

Dans le déclencheur électronique selon l'art antérieur représenté à la figure 2, l'enroulement secondaire du capteur de courant T1 est connecté à un pont redresseur constitué par un groupe de quatre diodes 11 à 14. Une première extrémité de l'enroulement secondaire est connectée à l'anode d'une première diode 11 et à la cathode d'une seconde diode 13, tandis qu'une seconde extrémité de l'enroulement secondaire est connectée à l'anode d'une troisième diode 12 et à la cathode d'une quatrième diode 14. Les cathodes des première et troisième diodes, 11 et 12, sont connectées à une ligne d'alimentation positive VP. Les anodes des seconde et quatrième diodes, 13 et 14, sont connectées à une masse de référence électrique du déclencheur. Les autres capteurs T2 et T3 sont connectés de la même manière à deux ponts redresseurs, représentés respectivement par des diodes 11a, 12a, 13a, 14a et 11b, 12b, 13b et 14b. Les cathodes des diodes 11a, 11b, 12a et 12b sont reliées à la ligne VP. Les anodes des diodes 13a, 13b, 14a et 14b sont connectées à la masse de référence électrique du déclencheur.

Le courant d'alimentation la circule dans la ligne d'alimentation positive VP à travers une diode 15 afin de charger un condensateur de stockage 16. Ainsi la tension VM aux bornes du condensateur de stockage permet d'alimenter électriquement l'actionneur. Le courant d'alimentation la permet également d'alimenter un régulateur de tension 17 destiné à réguler une tension VA d'alimentation de l'ensemble de traitement.

D'autres moyens 8 de capture et de mesure de courant permettent de fournir un signal Is représentatif d'au moins un courant primaire à l'ensemble électronique de traitement 6. Quand le courant primaire dépasse un seuil de déclenchement du disjoncteur, l'ensemble électronique de traitement 6 transmet à un transistor de commande 18 un ordre de déclenchement de l'actionneur 7. L'énergie stockée dans le condensateur de stockage 16 est alors utilisée pour alimenter l'actionneur.

La tension VM aux bornes du condensateur de stockage, destinée à alimenter électriquement l'actionneur, est régulée à l'aide d'un régulateur de tension 21 en mesurant la tension VM et en fournissant un ordre de commande à la grille d'un transistor 22. La diode 15 permet le passage du courant d'alimentation la pour charger le condensateur 16. Dès que la tension VM a atteint une valeur de fonctionnement, le régulateur de tension 21 transmet un ordre de commande permettant de dévier le courant d'alimentation Ia. Quand la tension VM est inférieure à la valeur de fonctionnement, le régulateur de tension transmet un ordre de commande permettant de rétablir la circulation du courant d'alimentation la pour recharger le condensateur de stockage 16.

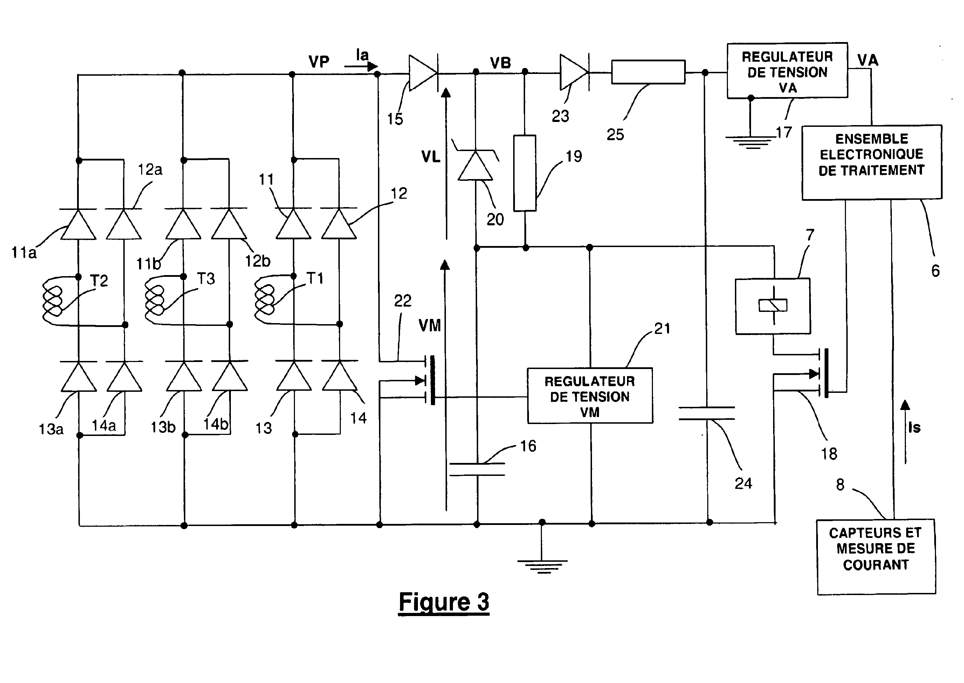

Le déclencheur électronique représenté à la figure 3, comporte les composants représentés à la figure 2 et décrits précédemment. Le déclencheur électronique de la figure 3 comporte, en outre, des moyens rehausseurs de tension destinés à fournir une tension rehaussée VB au régulateur de tension 17, lesdits moyens rehausseur étant connectés entre la cathode de la diode 15 et le condensateur de stockage 16. Dans le cas représenté à la Figure 3, les moyens rehausseurs comportent une résistance 19 et une diode limitatrice de tension 20 montée en inverse parallèlement à ladite résistance, de sorte que, lors de la charge du condensateur de stockage 16, la tension rehaussée VB atteint rapidement une valeur égale à la somme de la tension VM aux bornes du condensateur et de la tension de limitation VL de ladite diode 20. Dès le début de la charge du condensateur de stockage 16, au moins une partie du courant d'alimentation la circule à travers la résistance 19. Lorsque la tension aux bornes de la résistance 19 atteint la tension de limitation, la diode limitatrice de tension 20 maintient cette tension à une valeur égale à ladite tension de limitation VL. Ainsi, la tension rehaussée, au début de la charge du condensateur de stockage 16, atteint rapidement une valeur égale à la tension de limitation VL.

La diode limitatrice de tension peut avantageusement présenter une tension de limitation VL supérieure ou égale à la valeur nominale de la tension d'alimentation VA de l'ensemble électronique de traitement, ce qui permet à l'ensemble électronique de traitement de fonctionner dès le début de la charge du condensateur de stockage 16. Ainsi, lors de la mise sous tension du disjoncteur, l'ensemble électronique de traitement 6 est mis sous tension avec un moindre retard.

La tension VM aux bornes du condensateur de stockage, destinée à alimenter électriquement l'actionneur, est régulée à l'aide du régulateur de tension 21. Ce régulateur permet de réduire la puissance dissipée par le courant d'alimentation la dans la résistance 19 et la diode 20.

Une diode 23 permet, lors de la mise en route du disjoncteur, de faire circuler le courant secondaire pour charger un condensateur 24 destiné à alimenter le régulateur de la tension 17. Le condensateur 24 combiné à une résistance 25 permet également le filtrage de la tension rehaussée VB à l'entrée du régulateur de tension 17.

Les évolutions des tensions VM, VB et VA en fonction du temps sont respectivement représentées par les courbes 31, 32 et 33 de la figure 3, pendant une phase transitoire de mise sous tension d'un disjoncteur.

Jusqu'à l'instant t1, une partie du courant d'alimentation la circule, via la diode 15, à travers la résistance 20 afin de charger le condensateur de stockage 16. Une autre partie du courant la circule à travers la diode 23 et la résistance 25 afin de charger le condensateur 24. La tension rehaussée VB atteint très rapidement une valeur égale à la tension de limitation VL de la diode 20, qui est en l'espèce sensiblement égale à la valeur nominale de la tension VA d'alimentation de l'ensemble électronique de traitement. Ainsi, à l'instant t1, la tension rehaussée VB a une valeur sensiblement égale à la valeur nominale de la tension VA. Le régulateur de tension 17 est donc suffisamment alimenté pour délivrer une tension égale à la valeur nominale de la tension VA.

Notons qu'à l'instant t1, la valeur de la tension VM aux bornes du condensateur de stockage 16 est significativement inférieure à la valeur nominale de la tension VA. Par rapport à un déclencheur de l'art antérieur, dans lequel le régulateur de tension 17 est directement alimenté par la tension VM aux bornes du condensateur de stockage, cette valeur de la tension VM ne serait pas encore suffisante pour permettre au régulateur de tension 17 de délivrer une tension d'alimentation nominale de l'ensemble électronique de traitement.

Entre les instants t1 et t3, le courant d'alimentation Ia est utilisé pour charger le condensateur de stockage 16. La tension rehaussée VB est sensiblement égale à la somme de la tension VM aux bornes du condensateur de stockage 16 et de la tension de limitation VL de la diode 20.

Notons qu'à l'instant t2, la tension VM aux bornes du condensateur de stockage est égale à la valeur nominale de la tension VA. Par rapport à un déclencheur de l'art antérieur, dans lequel le régulateur de tension 17 est alimenté par la tension VM aux bornes du condensateur de stockage, ce n'est qu'à cet instant t2 que cette tension VM est suffisante pour permettre au régulateur de tension 17 de délivrer une tension égale à la valeur nominale de la tension VA. Ainsi, le déclencheur de l'invention permet, dans ce mode de réalisation, une mise sous tension avancée de l'ensemble électronique de traitement. Le gain de temps, par rapport à un déclencheur de l'art antérieur dans lequel le régulateur de tension 17 est alimenté par la tension VM aux bornes du condensateur de stockage, est de t2-t1.

A l'instant t3, la tension VM atteint une valeur de fonctionnement VMc et le régulateur de tension 21 transmet au transistor 22 un ordre de commande permettant de dévier le courant secondaire. La tension rehaussée VB atteint, quant à elle, une valeur maximum VB+ correspondant sensiblement à la somme de la valeur de fonctionnement VMc et de la tension de limitation VL. Entre les instants t3 et t4, les tensions VM et VB diminuent du fait de la décharge du condensateur de stockage 16. A l'instant t4, la tension VM atteint une valeur inférieure à la valeur de fonctionnement VMc, et le régulateur de tension 21 transmet au transistor 22 un ordre de commande permettant de dévier le courant secondaire pour recharger le condensateur de stockage 16. A l'instant t5, la régulation de la tension VM répète le cycle compris entre les instants t3 et t5.

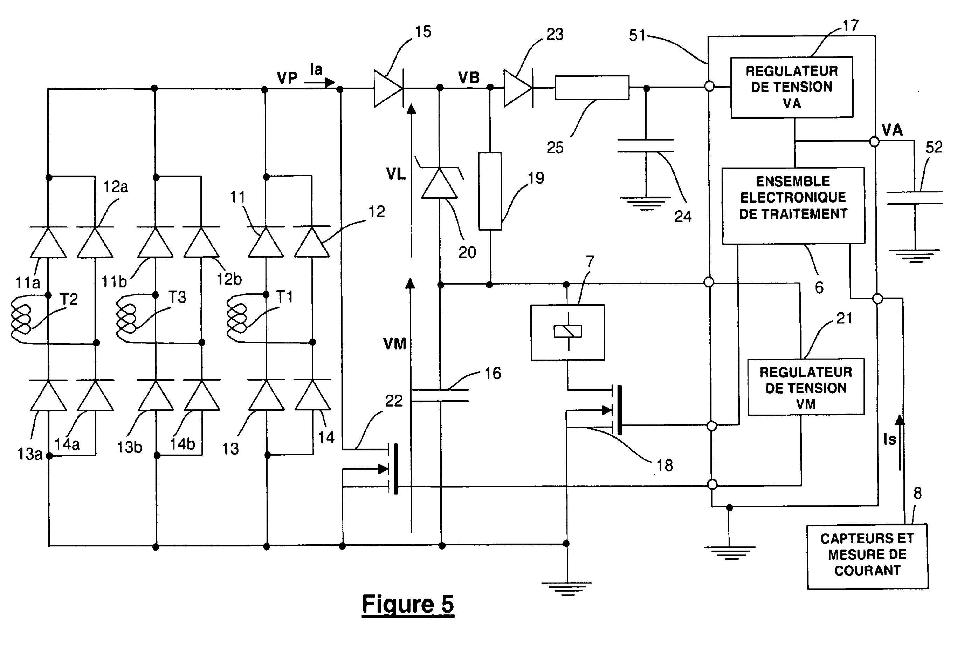

Le déclencheur électronique de la Figure 5 comporte un circuit intégré 51 rassemblant, entre autres, le régulateur de tension 17, l'ensemble électronique de traitement et le régulateur de tension 21. Le circuit intégré comporte une sortie du régulateur de tension 17 connectée à un condensateur 52 relié à une référence de masse électrique.

Dans le mode de réalisation présenté précédemment, les moyens rehausseur peuvent comporter une résistance (19) et/ou un limiteur de tension (20) en série avec le condensateur de stockage. Dans d'autres modes de réalisation, les moyens rehausseur peuvent comporter d'autres circuits électroniques permettant de rehausser la tension, tels que, par exemple, des circuits semi-conducteurs ou des circuits intégrés.

Un avantage du déclencheur selon l'invention est d'assurer une mise sous tension de l'ensemble électronique de traitement le plus tôt possible lors de la mise sous tension du disjoncteur.

## Revendications

1. Déclencheur électronique comprenant :
- au moins un capteur de courant (T1, T2, T3) pour fournir un courant secondaire représentatif d'un courant primaire dans un conducteur principal (1) dudit disjoncteur,
- un circuit de redressement (3) pour redresser le courant secondaire et fournir un courant d'alimentation (Ia),
- un ensemble électronique de traitement (6) pour commander un actionneur destiné à actionner un mécanisme d'ouverture (9) du conducteur principal (1), et
- un circuit d'alimentation électrique (4) doté d'un condensateur de stockage (16) destiné à alimenter électriquement l'actionneur et d'un régulateur de tension (17) destiné à fournir une tension d'alimentation (VA) de l'ensemble électronique de traitement, ledit condensateur de stockage étant chargé à l'aide du courant d'alimentation (Ia),
**caractérisé en ce que** le circuit d'alimentation comporte des moyens rehausseurs de tension (19, 20) permettant, lors de la charge du condensateur, de fournir une tension rehaussée (VB) à l'entrée du régulateur de tension (17) destiné à fournir la tension d'alimentation (VA) de l'ensemble électronique de traitement, ladite tension rehaussée (VB) étant supérieure à une tension (VM) aux bornes du condensateur de stockage (16).

2. Déclencheur électronique selon la revendication 1, **caractérisé en ce que** les moyens rehausseurs de tension comportent une résistance (19) connectée en série avec le condensateur de stockage (16) de sorte que, lors de la circulation du courant d'alimentation (Ia) pour charger ledit condensateur, la tension rehaussée (VB) a une valeur supérieure ou égale à la somme de la tension (VM) aux bornes dudit condensateur et de la tension aux bornes de ladite résistance.

3. Déclencheur électronique selon la revendication 2, **caractérisé en ce que** les moyens rehausseurs de tension comportent un limiteur de tension (20) connecté en série avec le condensateur de stockage (16) de sorte que, lors de la circulation du courant d'alimentation (Ia) pour charger ledit condensateur de stockage (16), la tension rehaussée (VB) atteint rapidement une valeur supérieure ou égale à la somme de la tension (VM) aux bornes dudit condensateur et d'une tension de limitation dudit limiteur de tension.

4. Déclencheur électronique selon la revendication 3, **caractérisé en ce que** le limiteur de tension est une diode limitatrice de tension (20) présentant une tension de limitation (VL), ladite diode étant connectée en inverse.

5. Déclencheur électronique selon l'une des revendications 2 à 4, **caractérisé en ce que** les moyens rehausseurs de tension comportent une résistance (19) et un limiteur de tension (20) connectés en parallèle.

6. Déclencheur électronique selon l'une des revendications 3 à 5, **caractérisé en ce que** la tension de limitation (VL) est supérieure ou égale à une valeur nominale de la tension d'alimentation (VA) de l'ensemble électronique de traitement.

7. Déclencheur électronique selon l'une des revendications 1 à 6, **caractérisé en ce que** la tension (VM) aux bornes du condensateur de stockage est régulée par un régulateur de tension (21).

8. Déclencheur électronique selon l'une des revendications 1 à 7, **caractérisé en ce qu'**il comporte des moyens de filtrage (23, 24, 25) de la tension rehaussée (VB) connectés en amont du régulateur de tension (17) destiné à fournir la tension d'alimentation (VA) de l'ensemble électronique de traitement.

9. Disjoncteur comprenant :
- au moins un conducteur principal (1),
- un mécanisme d'ouverture (9) du conducteur principal,
- un actionneur (7) destiné à actionner le mécanisme d'ouverture (9), et
- un déclencheur avec un ensemble électronique de traitement (6) pour commander l'actionneur et un circuit d'alimentation électrique (4) destiné à alimenter électriquement l'actionneur doté d'un régulateur de tension (17) destiné à fournir une tension d'alimentation (VA) de l'ensemble électronique de traitement,
**caractérisé en ce que** le déclencheur est un déclencheur selon l'une des revendications 1 à 8 comportant des moyens rehausseurs de tension (19, 20) permettant de fournir une tension rehaussée (VB) à l'entrée du régulateur de tension (17) destiné à fournir la tension d'alimentation (VA) de l'ensemble électronique de traitement.

## Patentansprüche

1. Elektronischer Auslöser, umfassend:
- mindestens einen Stromwandler (T1, T2, T3) zur Lieferung eines Sekundärstroms, der einen über einen Hauptleiter (1) des Leistungsschalters fließenden Primärstrom abbildet,
- eine Gleichrichterschaltung (3) zur Gleichrichtung des Sekundärstroms und Lieferung eines Versorgungsstroms (Ia),
- eine elektronische Verarbeitungsschaltung (6) zur Ansteuerung eines Betätigungsorgans, das dazu dient, einen Ausschaltmechanismus (9) zur Abschaltung des Hauptleiters (1) zu beaufschlagen, sowie
- eine Stromversorgungsschaltung (4), die einen Speicherkondensator (16) zur Spannungsversorgung des Betätigungsorgans sowie einen Spannungsregler (17) zur Lieferung einer Versorgungsspannung (VA) an die elektronische Verarbeitungsschaltung umfasst, wobei der genannte Speicherkondensator mithilfe des Versorgungsstroms (Ia) aufgeladen wird,
**dadurch gekennzeichnet, dass** die Stromversorgungsschaltung Spannungserhöhungsmittel (19, 20) umfasst, die es ermöglichen, eine erhöhte Spannung (VB) am Eingang des zur Lieferung der Versorgungsspannung (VA) an die elektronische Verarbeitungsschaltung dienenden Spannungsreglers (17) bereitzustellen, welche erhöhte Spannung (VB) größer ist als eine an den Klemmen des Speicherkondensators (16) anliegende Spannung (VM).

2. Elektronischer Auslöser nach Anspruch 1, **dadurch gekennzeichnet, dass** die Spannungserhöhungsmittel einen in Reihe zum Speicherkondensator (16) geschalteten Widerstand (19) umfassen, derart, dass beim Fließen des Versorgungsstroms (Ia) zum Aufladen des Kondensators der Wert der erhöhten Spannung (VB) größer oder gleich der Summe aus der Spannung (VM) an den Klemmen des genannten Kondensators und der Spannung an den Klemmen des genannten Widerstands ist.

3. Elektronischer Auslöser nach Anspruch 2, **dadurch gekennzeichnet, dass** die Spannungserhöhungsmittel einen in Reihe zum Speicherkondensator (16) geschalteten Spannungsbegrenzer (20) umfassen, derart, dass beim Fließen des Versorgungsstroms (Ia) zum Aufladen des genannten Speicherkondensators (16) die erhöhte Spannung (VB) schnell einen Wert erreicht, der größer oder gleich der Summe aus der Spannung (VM) an den Klemmen des genannten Kondensators und einer Begrenzungsspannung des genannten Spannungsbegrenzers ist.

4. Elektronischer Auslöser nach Anspruch 3, **dadurch gekennzeichnet, dass** es sich bei dem Spannungsbegrenzer um eine Spannungsbegrenzerdiode (20) mit einer Begrenzungsspannung (VL) handelt, welche Diode in Sperrrichtung geschaltet ist.

5. Elektronischer Auslöser nach einem der Ansprüche 2 bis 4, **dadurch gekennzeichnet, dass** die Spannungserhöhungsmittel eine Parallelschaltung aus einem Widerstand (19) und einem Spannungsbegrenzer (20) umfassen.

6. Elektronischer Auslöser nach einem der Ansprüche 3 bis 5, **dadurch gekennzeichnet, dass** die Begrenzungsspannung (VL) größer oder gleich einem Nennwert der Versorgungsspannung (VA) der elektronischen Verarbeitungsschaltung ist.

7. Elektronischer Auslöser nach einem der Ansprüche 1 bis 6, **dadurch gekennzeichnet, dass** die Spannung (VM) an den Klemmen des Speicherkondensators durch einen Spannungsregler (21) geregelt wird.

8. Elektronischer Auslöser nach einem der Ansprüche 1 bis 7, **dadurch gekennzeichnet, dass** er Filtermittel (23, 24, 25) zur Filterung der erhöhten Spannung (VB) umfasst, welche Filtermittel eingangsseitig an den zur Lieferung der Versorgungsspannung (VA) an die elektronische Verarbeitungsschaltung bestimmten Spannungsregler (17) angeschlossen sind.

9. Leistungsschalter mit
- mindestens einem Hauptleiter (1),
- einem Ausschaltmechanismus (9) zur Abschaltung des Hauptleiters,
- einem Betätigungsorgan (7) zur Betätigung des Ausschaltmechanismus' (9) sowie
- einem Auslöser mit einer elektronischen Verarbeitungsschaltung (6) zur Ansteuerung des Betätigungsorgans sowie einer Stromversorgungsschaltung (4) zur Stromversorgung des Betätigungsorgans, welche Stromversorgungsschaltung einen Spannungsregler (17) zur Lieferung einer Versorgungsspannung (VA) an die elektronische Verarbeitungsschaltung umfasst,
**dadurch gekennzeichnet, dass** der Auslöser als Auslöser nach einem der Ansprüche 1 bis 8 ausgebildet ist und Spannungserhöhungsmittel (19, 20) umfasst, die es ermöglichen, eine erhöhte Spannung (VB) am Eingang des zur Lieferung einer Versorgungsspannung (VA) an die elektronische Verarbeitungsschaltung bestimmten Spannungsreglers (17) bereitzustellen.

## Claims

1. Electronic trip device comprising:
- at least one current sensor (T1, T2, T3) for providing a secondary current representative of a primary current in a main conductor (1) of the said circuit breaker,
- a rectification circuit (3) for rectifying the secondary current and providing a power supply current (Ia),
- an electronic processing assembly (6) for controlling an actuator intended to actuate an opening mechanism (9) for the main conductor (1), and
- an electrical power supply circuit (4) furnished with a storage capacitor (16) intended to electrically power the actuator and with a voltage regulator (17) intended to provide a power supply voltage (VA) for the electronic processing assembly, the said storage capacitor being charged with the aid of the power supply current (Ia), **characterized in that** the power supply circuit comprises voltage-boosting means (19, 20) making it possible, during the charging of the capacitor, to provide a boosted voltage (VB) at the input of the voltage regulator (17) intended to provide the power supply voltage (VA) for the electronic processing assembly, the said boosted voltage (VB) being greater than a voltage (VM) across the terminals of the storage capacitor (16).

2. Electronic trip device according to Claim 1, **characterized in that** the voltage-boosting means comprise a resistor (19) connected in series with the storage capacitor (16) so that, during the flow of the power supply current (Ia) to charge the said capacitor, the boosted voltage (VB) has a value greater than or equal to the sum of the voltage (VM) across the terminals of the said capacitor and of the voltage across the terminals of the said resistor.

3. Electronic trip device according to Claim 2, **characterized in that** the voltage-boosting means comprise a voltage limiter (20) connected in series with the storage capacitor (16) so that, during the flow of the power supply current (Ia) to charge the said storage capacitor (16), the boosted voltage (VB) rapidly attains a value greater than or equal to the sum of the voltage (VM) across the terminals of the said capacitor and of a limitation voltage of the said voltage limiter.

4. Electronic trip device according to Claim 3, **characterized in that** the voltage limiter is a voltage-limiting diode (20) exhibiting a limitation voltage (VL), the said diode being reverse-connected.

5. Electronic trip device according to one of Claims 2 to 4, **characterized in that** the voltage-boosting means comprise a resistor (19) and a voltage limiter (20) connected in parallel.

6. Electronic trip device according to one of Claims 3 to 5, **characterized in that** the limitation voltage (VL) is greater than or equal to a nominal value of the power supply voltage (VA) for the electronic processing assembly.

7. Electronic trip device according to one of Claims 1 to 6, **characterized in that** the voltage (VM) across the terminals of the storage capacitor is regulated by a voltage regulator (21).

8. Electronic trip device according to one of Claims 1 to 7, **characterized in that** it comprises means of filtering (23, 24, 25) of the boosted voltage (VB) connected upstream of the voltage regulator (17) intended to provide the power supply voltage (VA) for the electronic processing assembly.

9. Circuit breaker comprising:
- at least one main conductor (1),
- an opening mechanism (9) for the main conductor,
- an actuator (7) intended to actuate the opening mechanism (9), and
- a trip device with an electronic processing assembly (6) for controlling the actuator and an electrical power supply circuit (4) intended to electrically power the actuator furnished with a voltage regulator (17) intended to provide a power supply voltage (VA) for the electronic processing assembly,
**characterized in that** the trip device is a trip device according to one of Claims 1 to 8 comprising voltage-boosting means (19, 20) making it possible to provide a boosted voltage (VB) at the input of the voltage regulator (17) intended to provide the power supply voltage (VA) for the electronic processing assembly.
